# FASCICULE DE BREVET EUROPEEN

(11) **EP 3 431 343 B1**
(45) Date de publication et mention de la délivrance du brevet: **04.03.2020**
(21) Numéro de dépôt: 18177744.2
(22) Date de dépôt: 14.06.2018
(51) Int. Cl.: B60R 13/01, B32B 5/00, B60N 3/04, B32B 21/04

(54) **AGENCEMENT DE POSE DE TAPIS POUR PLANCHER DE COFFRE DE VEHICULE**
ANORDNUNG ZUR BODENMATTENVERLEGUNG FÜR KOFFERRAUMBODEN EINES FAHRZEUGS
ARRANGEMENT FOR LAYING A FLOOR MAT FOR A VEHICLE LUGGAGE COMPARTMENT

(30) Priorité: 19.07.2017 FR 1756829
(43) Date de publication de la demande: 23.01.2019
(73) Titulaire: PSA Automobiles SA, 78300 Poissy (FR)
(72) Inventeur: PETIT, FRANCOIS, 25260 MONTENOIS (FR); WOLF, GUILLAUME, 25750 AIBRE (FR); BENTALEB, SALIM, 20650 CASABLANCA (MA); ZAHIDI, EL HABIB, KHOURIBGA (MA)

(56) Documents cités:
- DE-A1- 2 911 690
- DE-A1-102014 106 768
- DE-U1- 29 501 070
- GB-A- 2 463 570

## Description

L'invention se situe dans le domaine de l'aménagement intérieur de véhicule de type break ou utilitaire et plus généralement de véhicule possédant un coffre en proposant un tapis amovible constitué de plusieurs couches aptes à s'adapter à plusieurs hauteurs de plancher de coffre selon la version de véhicule.

Selon l'état de la technique actuelle, il existe de nombreux documents décrivant des tapis avec des revêtements différents pour des planchers de véhicule Par exemple, le document US20130255176 décrit un tapis comportant deux couches, formant des cavités entre les deux couches. L'intérieur de la cavité ainsi créée peut-être rempli d'un matériau expansé. Le document EP1164056 décrit un tapis sous forme de panneau pour couvrir la surface d'un coffre de véhicule. La surface portante est portée par un élément de support en matériau type mousse de polypropylène ou en polyuréthane. Le document FR2792892 décrit un tapis de coffre recouvrant un plancher de charge. Ledit tapis peut être réalisé en matériau compressée avec différents taux de compression selon les zones. Enfin le document GB2463570 décrit un véhicule comportant un compartiment de rangement pour une surface de plancher, pour ranger des objets, comprenant une paroi en forme de cuvette ayant une zone formant une saillie et entourant une ouverture d'accès, un élément formant couvercle destine à recouvrir la zone de support recouvrant l'ouverture d'accès. Le couvercle peut comprendre une partie de recouvrement destinée à recouvrir la section de jonction, le couvercle étant pourvu d'une poignée et forme un tapis de sol. Le tapis de sol reste en place lorsque le compartiment de stockage est utilisé. Dans ce cas, il s'agit d'un couvercle muni d'un joint destiné à réaliser l'étanchéité sur la zone en saillie formant la bordure de la cuvette, afin d'empêcher que des débris divers se répandre dans la cuvette.

L'invention a pour objectif de résoudre les problèmes rencontrés dans l'art antérieur en proposant un tapis multi couche de constitution légère et résistante, destiné à s'adapter à différents modèles de coffre.

A cet effet l'invention propose un agencement de pose de tapis pour plancher de coffre de véhicule, constitué de plusieurs couches de matériaux, le tapis comportant des couches de largeur différentes pour s'adapter au contour du plancher du coffre, le tapis comportant des largeurs de couches différentes en forme d'escaliers inversé afin de s'adapter au profil du plancher du coffre, et en ce que le tapis comporte quatre couches de matériaux différents

Selon un mode de réalisation préféré de l'invention, le tapis comporte une couche de feutre, une couche de polystyrène expansé, une couche de bois sous forme d'un panneau, et une couche de moquette.

Selon une variante, la couche de feutre est de 10 millimètres, la couche de polystyrène expansé est 15 millimètres, l'épaisseur du bois est de 5 millimètres et l'épaisseur de la moquette est de 3 millimètres.

Avantageusement, le panneau de bois constitue l'ossature du tapis et assure la résistance mécanique dudit tapis.

Selon une autre variante, les différentes couches sont solidarisés par collage et, ou par surmoulage.

De façon avantageuse, le contour possède un rebord horizontal raccordé par un arrondi sur une paroi verticale, le rebord étant prolongé par un autre rebord.

Selon une variante, la différence de hauteur entre le rebord et le rebord est égal à l'épaisseur du panneau de bois, le rebord fournissant la surface d'appui principal du panneau de bois.

De manière optionnelle, le plancher du coffre présente un fond plat présentant alternativement des zones bosselées planes fournissant une surface d'appui secondaire pour la couche de feutre.

L'invention sera bien comprise et d'autres aspects et avantages apparaîtront clairement à la lecture de la description qui suit, donnée à titre d'exemple par rapport aux figures annexées sur lesquelles :
- La figure 1 présente une vue en coupe schématique de profil de l'agencement d'un tapis placé au niveau du plancher de coffre d'un véhicule, suivant l'invention ;
- La figure 2 présente une vue en coupe schématique partielle d'un tapis posé sur le plancher d'un coffre, suivant l'invention.

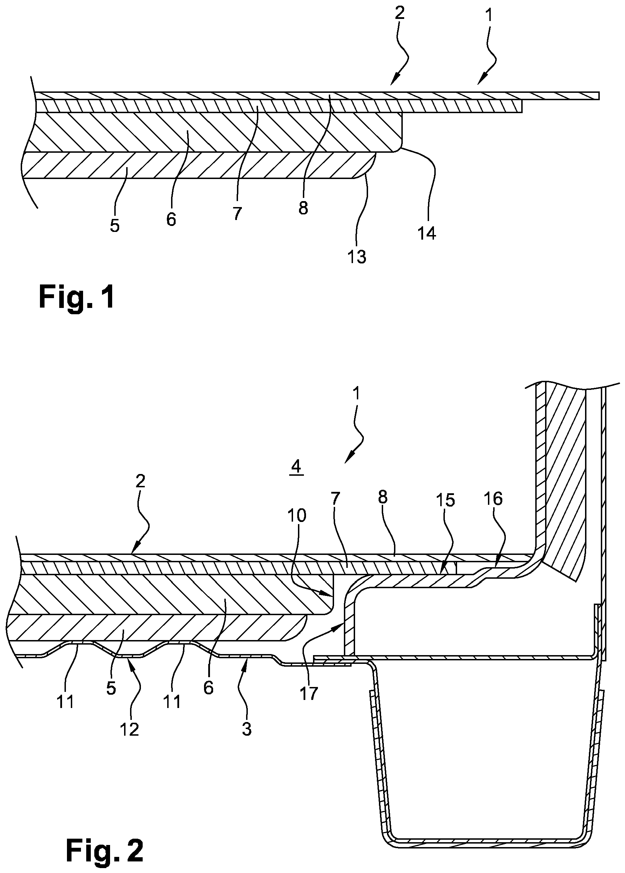

La figure 1 présente une vue en coupe schématique de profil de l'agencement 1 d'un tapis 2 placé au niveau du plancher 3 (fig.2) de coffre 4 (fig.2) d'un véhicule, suivant l'invention. Le tapis 2 est constitué de plusieurs couches de matériau superposées façonnées suivant une épaisseur régulière et constante. Le tapis 2 comprend sa base, une couche de feutre 5, surmontée d'une couche de polystyrène expansé 6, accolé à un panneau de bois 7 recouvert par de la moquette 8. La couche de polystyrène expansé 6 est solidarisée au panneau de bois 7 par collage ou par injection procurant un surmoulage. Le panneau de bois 7 constitue l'ossature du tapis 2. La moquette 8 est montée par collage sur le bois 7 sur la face supérieure. La couche de feutre 5 est assemblée par collage sur couche de polystyrène expansé 6. Selon une réalisation préférentielle, la couche de feutre 5 est de 10 millimètres, la couche de polystyrène expansé 6 est 15 millimètres, l'épaisseur du bois 7 est de 5 millimètres et l'épaisseur de la moquette 8 est de 3 millimètres.

Le tapis 2 est constitué de quatre couches différentes et l'épaisseur des différentes couches 5,6,7,8 peuvent varier de plus ou moins 10 pour cent. Les différentes épaisseurs de couches 5,6,7,8 sont décalées sur la largeur du tapis 2, en forme d'escalier inversé afin d'obtenir une bonne qualité perçue et de manière à s'adapter au plus juste au profil du coffre sur lequel le tapis 2 va s'adapter. A cet effet, l'extrémité du feutre 5 est arrondie suivant un rayon 13 égal à l'épaisseur du feutre 5, tandis que la couche de polystyrène expansé 6 possède un léger arrondi 14.

La figure 2 présente une vue en coupe schématique partielle d'un tapis 2 posé sur le plancher 3 d'un coffre 4 de véhicule, suivant l'invention. Sur la figure, seule une moitié du coffre 4 est représenté, mais il est bien symétrique et évidemment conçu pour recouvrir la totalité du coffre 4. Le coffre 4 considéré comporte un contour 10 possédant un rebord horizontal 15 raccordé par un arrondi sur une paroi verticale 17 dont l'extrémité est raccordée sur le fond du coffre 4. Le rebord 15 permet l'appui du panneau de bois 7, puis ce rebord 15 est prolongé par un autre rebord 16 sur lequel la moquette 8 extérieure au panneau de bois 7 vient recouvrir intégralement le fond 12 du coffre 4, tandis que la couche de feutre 5 vient porter sans pression sur des zones bosselées planes 11 façonnées dans le fond 12 du coffre 4, le panneau de bois 7. Les rebords 15, 16 sont réalisés de manière que la surface supérieure du tapis 2 soit rigoureusement plane dans le fond du coffre 4. La différence de hauteur entre le rebord 15 et le rebord 16 est rigoureusement égal à l'épaisseur du panneau de bois 7. Il est bien évident que lorsque le coffre 4 est chargé la couche de feutre 5 vient porter avec une plus forte pression sur les zones bosselées planes 11, mais sans détériorer les performances du tapis 2.

## Revendications

1. Agencement (1) de pose de tapis (2) pour plancher (3) de coffre (4) de véhicule, constitué de plusieurs couches de matériau, le tapis (2) comportant des couches ayant chacune une largeur différente pour s'adapter au contour (10) du plancher (3) du coffre (4), le tapis (2), comportant des largeurs de couches différentes en forme d'escalier inversé afin de s'adapter au profil du plancher (3) du coffre (4), **caractérisé en ce que** le tapis (2) comporte quatre couches de matériaux différents.

2. Agencement (1) selon la revendication 1, **caractérisé en ce que** le tapis (2) comporte une couche de feutre (5), une couche de polystyrène expansé (6), une couche de bois (7) sous forme d'un panneau, et une couche de moquette (8).

3. Agencement (1) selon la revendication2, **caractérisé en ce que** la couche de feutre (5) est de 10 millimètres, la couche de polystyrène expansé (6) est 15 millimètres, l'épaisseur du bois (7) est de 5 millimètres et l'épaisseur de la moquette (8) est de 3 millimètres.

4. Agencement (1) selon l'une quelconque des revendications 2 ou 3, **caractérisé en ce que** le panneau de bois (7) constitue l'ossature du tapis (2) et assure la résistance mécanique du dit tapis (2).

5. Agencement (1) selon l'une quelconque des revendications 1 à 4, **caractérisé en ce que** les différentes couches sont solidarisés par collage et, ou par surmoulage.

6. Agencement (1) selon la revendication 1, **caractérisé en ce que** le contour (10) possède un rebord horizontal (15) raccordé par un arrondi sur une paroi verticale (17), le rebord 15 étant prolongé par un autre rebord (16).

7. Agencement (1) selon la revendication 6, **caractérisé en ce que** la différence de hauteur entre le rebord (15) et le rebord (16) est égal à l'épaisseur du panneau de bois (7), le rebord (15) fournissant la surface d'appui principal du panneau de bois (7).

8. Agencement (1) selon la revendication 1, **caractérisé en ce que** le plancher (3) du coffre (4) présente un fond plat (12) présentant alternativement des zones bosselées (11) planes fournissant une surface d'appui secondaire pour la couche de feutre (5).

## Patentansprüche

1. Anordnung (1) zur Verlegung einer Matte (2) für einen Fußboden (3) eines Fahrzeugkofferraums (4), die aus mehreren Materialschichten besteht, wobei die Matte (2) Schichten umfasst, die jeweils eine unterschiedliche Breite aufweisen, um sich an eine Kontur (10) des Fußbodens (3) des Kofferraums (4) anzupassen, wobei die Matte (2) unterschiedliche Schichtbreiten in Form einer umgekehrten Stufe umfasst, um sich an das Profil des Fußbodens (3) des Kofferraums (4) anzupassen, **dadurch gekennzeichnet, dass** die Matte (2) vier Schichten unterschiedlicher Materialien umfasst.

2. Anordnung (1) nach Anspruch 1, **dadurch gekennzeichnet, dass** die Matte (2) eine Filzschicht (5), eine Schicht aus expandiertem Polystyrol (6), eine Holzschicht (7) in Form einer Platte und eine Läuferschicht (8) umfasst.

3. Anordnung (1) nach Anspruch 2, **dadurch gekennzeichnet, dass** die Filzschicht (5) 10 Millimeter beträgt, die Schicht aus expandiertem Polystyrol (6) 15 Millimeter beträgt, die Stärke des Holzes (7) 5 Millimeter beträgt, und die Stärke des Läufers (8) 3 Millimeter beträgt.

4. Anordnung (1) nach einem der Ansprüche 2 oder 3, **dadurch gekennzeichnet, dass** die Holzplatte (7) das Gerippe der Matte (2) bildet und die mechanische Festigkeit der Matte (2) sicherstellt.

5. Anordnung (1) nach einem der Ansprüche 1 bis 4, **dadurch gekennzeichnet, dass** die unterschiedlichen Schichten durch Kleben und/oder durch Umspritzen fest verbunden sind.

6. Anordnung (1) nach Anspruch 1, **dadurch gekennzeichnet, dass** die Kontur (10) einen horizontalen Rand (15) umfasst, der durch eine Rundung auf einer vertikalen Wand (17) angeschlossen ist, wobei der Rand (15) durch einen anderen Rand (16) verlängert ist.

7. Anordnung (1) nach Anspruch 6, **dadurch gekennzeichnet, dass** der Höhenunterschied zwischen dem Rand (15) und dem Rand (16) gleich der Stärke der Holzplatte (7) ist, wobei der Rand (15) die Hauptauflageoberfläche der Holzplatte (7) bildet.

8. Anordnung (1) nach Anspruch 1, **dadurch gekennzeichnet, dass** der Fußboden (3) des Kofferraums (4) einen flachen Grund (12) aufweist, der abwechselnd flache hohlgeprägte (11) Zonen aufweist, die eine große Sekundärauflageoberfläche für die Filzschicht (5) liefern.

## Claims

1. An arrangement (1) for laying a mat (2) for the floor (3) of a vehicle luggage compartment (4), constituted by several layers of material, the mat (2) comprising layers each having a different width to adapt to the contour (10) of the floor (3) of the luggage compartment (4), the mat (2) comprising different widths of layers in the form of an inverse staircase so as to adapt to the profile of the floor (3) of the luggage compartment (4), **characterized in that** the mat (2) comprises four layers of different materials.

2. The arrangement (1) according to Claim 1, **characterized in that** the mat (2) comprises a layer of felt (5), a layer of expanded polystyrene (6), a layer of wood (7) in the form of a panel, and a layer of carpet (8).

3. The arrangement (1) according to Claim 2, **characterized in that** the layer of felt (5) is 10 millimetres, the layer of expanded polystyrene (6) is 15 millimetres, the thickness of the wood (7) is 5 millimetres and the thickness of the carpet (8) is 3 millimetres.

4. The arrangement (1) according to any one of Claims 2 or 3, **characterized in that** the wood panel (7) constitutes the framework of the mat (2) and ensures the mechanical resistance of said mat (2).

5. The arrangement (1) according to any one of Claims 1 to 4, **characterized in that** the different layers are secured by gluing and or by overmoulding.

6. The arrangement (1) according to Claim 1, **characterized in that** the contour (10) has a horizontal edge (15) connected by a rounded portion on a vertical wall (17), the edge (15) being extended by another edge (16).

7. The arrangement (1) according to Claim 6, **characterized in that** the difference in height between the edge (15) and the edge (16) is equal to the thickness of the panel of wood (7), the edge (15) providing the main support surface of the panel of wood (7).

8. The arrangement (1) according to Claim 1, **characterized in that** the floor (3) of the luggage compartment (4) has a flat bottom (12) having alternately planar dented regions (11) providing a secondary support surface for the layer of felt (5).
